(19) Europäisches Patentamt
European Patent Office
Office européen des brevets

(11) **EP 2 834 611 B1**

(12) **EUROPÄISCHE PATENTSCHRIFT**

(45) Veröffentlichungstag und Bekanntmachung des Hinweises auf die Patenterteilung:
**29.04.2020   Patentblatt 2020/18**

(21) Anmeldenummer: **13712187.7**

(22) Anmeldetag: **19.03.2013**

(51) Int Cl.:
***G01L 17/00*** *(2006.01)*

(86) Internationale Anmeldenummer:
**PCT/EP2013/055708**

(87) Internationale Veröffentlichungsnummer:
**WO 2013/149824 (10.10.2013 Gazette 2013/41)**

(54) **VERFAHREN UND VORRICHTUNG ZUR REIFENDRUCKPRÜFUNG**

METHOD AND DEVICE FOR TYRE PRESSURE TESTING

PROCÉDÉ ET DISPOSITIF POUR CONTRÔLER LA PRESSION DE GONFLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2012   DE 102012205495**

(43) Veröffentlichungstag der Anmeldung:
**11.02.2015   Patentblatt 2015/07**

(73) Patentinhaber: **Beissbarth GmbH**
**80993 München (DE)**

(72) Erfinder:
• **NOBIS, Guenter**
**72622 Nuertingen (DE)**
• **UFFENKAMP, Volker**
**71642 Ludwigsburg (DE)**

(74) Vertreter: **Schmitt-Nilson Schraud Waibel Wohlfrom**
**Patentanwälte Partnerschaft mbB**
**Pelkovenstraße 143**
**80992 München (DE)**

(56) Entgegenhaltungen:
**DE-A1-102007 054 156     JP-A- S58 112 812**
**US-B1- 6 823 728**

**Beschreibung**

Die Erfindung betrifft ein Verfahren und eine Vorrichtung zum Prüfen des Drucks in einem Reifen eines Fahrzeugs, insbesondere eines rollenden Fahrzeugs.

Stand der Technik

Der Reifenfülldruck eines Kraftfahrzeuges ist für die Sicherheit im Straßenverkehr, für den Komfort und das Fahrverhalten des Fahrzeugs, für den Kraftstoffverbrauch und für den Reifenverschleiß von großer Bedeutung. Ein nicht den Belastungen angepasster Fülldruck kann den Geradeauslauf und die Fahrstabilität und damit die Sicherheit des Fahrzeugs erheblich beeinträchtigen, einen spürbaren Kraftstoffmehrverbrauch verursachen und zu einer deutlichen Verkürzung der Nutzungsdauer der Reifen führen.

Daher ist die Prüfung des Reifenfülldrucks fester Bestandteil des turnusmäßigen Kraftfahrzeug-Service. Diese unterliegen inzwischen einem sehr großen Zeitintervall. Der Reifenfülldruck sollte jedoch regelmäßig ca. alle 2 Wochen und zusätzlich bei besonderen Belastungen wie einer langen Reise mit hoher Geschwindigkeit und/oder schwerem Gepäck kontrolliert werden.

Die Kontrolle des Reifenfülldrucks obliegt der Disziplin des Fahrzeugführers. Gegenwärtig ist eine manuelle Prüfung des Reifenfülldrucks an Tankstellen und in Werkstätten möglich, dies ist jedoch umständlich.

Aus diesen Gründen findet die von den Reifenherstellern empfohlene Kontrolle des Reifenfülldrucks oft deutlich seltener oder gar nicht statt. Es wäre daher vorteilhaft, wenn der Reifenfülldruck z.B. bei der Anfahrt zu einer Tankstelle mit einer Prüfvorrichtung automatisch kontrolliert werden würde.

Aus den vergangenen Jahrzehnten sind etliche Verfahren zur Prüfung des Reifenfülldrucks bekannt.

Generell lassen sich die Verfahren in Verfahren zur direkten und in Verfahren zur indirekten Reifenfülldruckprüfung einteilen, wobei unterschieden werden kann, ob die Prüfung bei stehendem oder bei rollendem Fahrzeug bzw. Reifen erfolgt.

Ein Verfahren zum Prüfen des Reifenfülldrucks mit einem zu adaptierenden Druckmessgerät ist der direkten Reifenfülldruckprüfung bei stehendem Fahrzeug zuzuordnen und zum Beispiel aus FR 2 852 907 A3 bekannt. Darüber hinaus sind auch Verfahren der direkten Reifenfülldruckprüfung bekannt, die sowohl bei stehendem als auch bei rollendem Fahrzeug ausgeführt werden. Bei diesen Verfahren sind am Ventil (JP 3 141 838 U) oder innerhalb des Reifens (DE 19 630 015 A1; US 2008/0133081 A1) ein oder mehrere Sensoren vorgesehen, die den Reifenfülldruck kontinuierlich überwachen. Wenn der Reifenfülldruck vorgegebene Schwellwerte über- bzw. unterschreitet, wird dem Fahrzeuglenker eine Warnung angezeigt, und/oder es ertönt ein Warnsignal. Solche Sensoren sind jedoch oftmals ungenau und teuer.

Aus EP 656 269 A1, EP 695 935 A1 und WO 2008/034411 A1 sind Verfahren zur indirekten Reifenfülldruckprüfung bei rollendem Fahrzeug bekannt, bei denen die Räder des Fahrzeugs über eine Kraftsensormatrix rollen.

DE 10 2007 054 156 A1 beschreibt ein Verfahren zum Feststellen des Druckes und der Profiltiefe bei einem pneumatischen Fahrzeugreifen, der an einem Fahrzeug angebracht ist, wobei der Druck mit Hilfe einer Anordnung aus Lastsensoren, die Kraftsignale für ein zweidimensionales Muster der Kraftverteilung liefert, die von dem Fahrzeugreifen in Kontakt mit den Sensoren ausgeübt wird, wenn sich das Fahrzeug über die Anordnung bewegt, ermittelt wird. Dabei wird der Reifendruck unabhängig von der Herstellungsart oder dem Modell des Reifens und des Fahrzeugs aus der Kraftverteilung bestimmt. Vor, während oder nach der Bestimmung des Druckes wird auch die Profiltiefe des Reifens bestimmt.

US 6 823 728 B1 beschreibt Techniken zur Bestimmung des Innendrucks eines Luftreifens durch externe Mittel. Aus fundamentalen Beziehungen kann der Druck in einem Reifen als Funktion des Gewichts auf dem Rad geteilt durch die Fläche des Reifens auf dem Boden gemessen werden. Flächen- und Gewichtssensoren können in einem flachen Gehäuse oder einer Matte angeordnet sein. Wenn ein Fahrzeug über die Matte gefahren wird, extrahieren die Sensoren Gewichts- und Bereichsinformationen von jedem Reifen. Dann berechnet eine Rechenvorrichtung den Reifendruck in jedem der vier Reifen des Fahrzeugs und präsentiert diese Information dem Fahrer visuell oder akustisch. Die Bedienung des Geräts ist für den Fahrer transparent, so dass er nur den dafür vorgesehenen Bereich mit den Sensoren überfahren oder darauf anhalten muss.

Um die Genauigkeit der Pannenerkennung zu verbessern, schlägt JP S58 112 812 A vor, Wägezellen zu verwenden, um die Bodenkontaktlast auf den Reifen eines Fahrzeugs zu ermitteln, zu speichern und zu verarbeiten. Die Wägezellen sind zwischen einer Schiene für ein Fahrzeug und Trittbrettern angeordnet. Wenn die Räder die Wägezellen passieren, werden die Last jedes Reifens und die Zeit des Vorhandenseins des Reifens auf den Trittbrettern detektiert. Aus den gemessenen maximalen Lastwerten der Reifen und den Dauern des Vorhandenseins der Reifen auf den Trittbrettern berechnete Werte werden mit Sollwerten verglichen, um zu bestimmen, ob einer der Reifen durchbohrt ist.

Aus der Reifenaufstandsfläche (Latschfläche) und der Aufstandskraft der einzelnen Kraftsensoren innerhalb der Reifenaufstandsfläche oder den Unterschieden der gemessenen Aufstandskraft zwischen den einzelnen Kraftsensoren, d.h. aus charakteristischen Unterschieden in der Druckverteilung innerhalb der Reifenaufstandsfläche, lässt sich der Reifenfülldruck herleiten. Kraftsensormatrizen sind jedoch zum einen teuer, weil die Sensoren über eine ausreichend große Fläche angeordnet werden müssen. Zum anderen sind sie anfällig gegen Zerstörung und Fehlmessungen, wenn sie als druckempfindliche Messfolien ausgelegt sind, da sie beim Überrollen mechanischen Querbelastungen durch Anfahren und Bremsen sowie durch den Sturz der Räder und die Vorspur der Radachse ausgesetzt sind. Weitere Verfahren zur indirekten Reifenfülldruckprüfung bei rollendem Fahrzeug verwenden zur Erfassung der Druckverteilung in der Reifenaufstandsfläche anstatt einer Kraftsensormatrix eine Zeilenanordnung von Kraftsensoren. Die Zeile ist so dimensioniert, dass die Breite der Reifenaufstandsfläche (Latschbreite) erfasst werden kann. Die weiterhin zur Ermittlung der Reifenaufstandsfläche notwendige Länge der Reifenaufstandsfläche (Latschlänge) erfordert zusätzlich die Bestimmung der Geschwindigkeit des Kraftfahrzeuges. In US 5 396 817 wird die Geschwindigkeit aus dem Anstieg und dem Abfall des Signals bestimmt, das erzeugt wird, während der Reifen über die Kraftsensorzeile rollt. In EP 892 259 A1 ist in Fahrtrichtung vor der Kraftsensorzeile eine Kontaktschiene angeordnet, um im Zusammenwirken mit der Kraftsensorzeile die Fahrgeschwindigkeit zu ermitteln.

Die zuvor beschriebenen Verfahren mit Kraftsensormatrizen und Kraftsensorzeilen haben bisher keine breite Anwendung erfahren, da die Systeme sehr komplex sind und wegen der großen Datenmenge einer aufwändigen elektronischen Auswerte- und Recheneinheit bedürfen.

Ein Verfahren zur indirekten Reifenfülldruckprüfung bei rollendem Fahrzeug unter Verwendung einzelner Kraftsensoren ist aus WO 1998/052008 A1 bekannt. Bei diesem Verfahren überrollt das Rad zwei piezoelektrische Sensorkabel mit bekanntem Abstand. Piezoelektrische Sensoren erzeugen aufgrund einer auf sie wirkenden Kraft eine Spannung. Die Wellenform des Spannungssignals bei der Überfahrt weist eine vom Reifenluftdruck abhängige Charakteristik auf, die zusätzlich von der Radlast des Kraftfahrzeugs und von der Geschwindigkeit der Überfahrt abhängig ist. Das Verfahren sieht vor, die Geschwindigkeit aus dem bekannten Abstand der beiden Sensorkabel zu bestimmen, die Radlast aus der Amplitude des Spannungssignals abzuschätzen und entsprechende Korrekturen anzubringen, die in einer Datenbank abgelegt sind.

Weiterhin ist auch die optische Erfassung der Reifenaufstandsfläche bekannt:
DE 197 05 047 A1 offenbart ein Verfahren zur Messung der Profiltiefe eines Reifens, bei dem das Reifenprofil mit Laserlicht beaufschlagt wird.

US 2009/0290757 offenbart ein Verfahren, bei dem aus Bilddaten eines Objektes ein dreidimensionales Profil des Objektes erzeugt und das dreidimensionale Profil des Objektes analysiert wird, um Anomalien des Objektes zu erkennen.

Bei dem in EP 1 305 590 A1 beschriebenen Verfahren rollt ein Reifen über eine Glasplatte und eine Kamera unterhalb der Glasplatte zeichnet Bilder des Reifens auf. Diese Anordnung ist wegen Verschleiß, Verschmutzung und Gefahr der Beschädigung der Glasplatte für den Einsatz im rauen Umfeld des Straßenverkehrs nicht gut geeignet sondern eher dem Laborbetrieb vorbehalten.

Es besteht somit nach wie vor der Bedarf nach einem robusten, einfach und kostengünstig durchführbaren Verfahren zur indirekten Reifenfülldruckprüfung bei rollendem Fahrzeug und einer Vorrichtung, die zur Durchführung eines solchen Verfahrens ausgebildet ist.

Offenbarung der Erfindung

Ein erfindungsgemäßes Verfahren zum Überwachen des Drucks in einem Reifen eines rollenden Fahrzeugs wird mit den Verfahrensschritten des Anspruchs 1 definiert.

Eine erfindungsgemäße Vorrichtung wird mit den Merkmalen des Anspruchs 7 definiert.

Das Verfahren und die Vorrichtung sind geeignet, um in Bereichen mit geringen Fahrgeschwindigkeiten von Kraftfahrzeugen, wie z.B. an Einfahrten zu Tankstellen, Werkstätten oder Parkplätzen, eine Prüfung des Reifenfülldrucks durchzuführen und unmittelbar einen entsprechenden Hinweis, z.B. durch eine mehrfarbige Ampel, an den Kraftfahrzeugführer zu geben. Die Erfindung stellt durch eine Messung am rollenden Fahrzeug bzw. Rad eine breit einsetzbare und für den Fahrer komfortable Lösung zur Verfügung.

Die Erfindung stellt eine kostengünstige und robuste Lösung zur Verfügung, die auch unter rauen Prüfbedingungen eingesetzt werden kann. Eine erfindungsgemäße Vorrichtung kann in die Fahrbahn oder in eine flache Überfahrschwelle, die auf der Fahrbahn angeordnet ist, eingebaut werden.

Die Erfindung weist eine ausreichend hohe Genauigkeit zur indirekten Prüfung des Reifenfülldrucks am rollenden Fahrzeug auf.

Die Genauigkeit der Messung kann durch wenigstens eine zusätzliche Zeitmessung, die zu einer Überbestimmung führt, gesteigert werden und die Messung kann bei fehlender Konstanz der Überfahrgeschwindigkeit durch Bremsen oder Beschleunigen korrigiert oder für ungültig erklärt werden.

In einer Ausführungsform schließt das Verfahren ein, zu bestimmen, ob sich der Druck in dem Reifen in einem vorgegebenen Bereich befindet. Reifen mit zu geringem Reifenfülldruck (sicherheitsrelevant!) können so mit hoher Wahrscheinlichkeit erkannt werden.

In einer Ausführungsform schließt das Verfahren ein, aus der Länge der Reifenaufstandsfläche den Druck in dem Reifen zu bestimmen. Der Druck im Reifen kann so für den Fahrer einfach und bequem bestimmt werden.

In einer Ausführungsform schließt das Verfahren ein, die Länge der Reifenaufstandsfläche aus Zeitdifferenzen zwischen dem Überrollen von wenigstens zwei in Fahrtrichtung hintereinander angeordneten Sensoren zu bestimmen. Die Länge der Reifenaufstandsfläche kann so zuverlässig mit ausreichend hoher Genauigkeit bestimmt werden.

In einer Ausführungsform sind die Sensoren als Kontaktschalter ausgebildet. Kontaktschalter stellen preiswerte und robuste Sensoren zur Verfügung, die auch für raue Prüfbedingungen geeignet sind. Die Kontaktschalter können mechanische Kontaktschalter sein, sind aber nicht auf diese beschränkt.

In einer Ausführungsform umfassen die zeitlichen Abstände die Zeitdifferenz zwischen dem ersten und letzten Kontakt der Reifenaufstandsfläche mit einem ersten Sensor.

In einer Ausführungsform umfassen die zeitlichen Abstände die Zeitdifferenz zwischen dem ersten Kontakt der Reifenaufstandsfläche mit einem ersten Sensor und dem ersten Kontakt der Reifenaufstandsfläche mit einem zweiten Sensor, der in Fahrtrichtung hinter dem ersten Sensor angeordnet ist.

In einer Ausführungsform umfassen die zeitlichen Abstände die Zeitdifferenz zwischen dem letzten Kontakt der Reifenaufstandsfläche mit einem ersten Sensor und dem letzten Kontakt der Reifenaufstandsfläche mit einem zweiten Sensor, der in Fahrtrichtung hinter dem ersten Sensor angeordnet ist. Mittels derartiger Zeitdifferenzbestimmungen kann die Länge der Reifenaufstandsfläche des Reifens zuverlässig mit ausreichender Genauigkeit bestimmt werden.

In einer Ausführungsform schließt das Verfahren ein, die Reifenaufstandsflächen von wenigstens zwei Reifen, insbesondere von Reifen, die auf einer gemeinsamen Achse montiert sind, miteinander zu vergleichen. Auf diese Weise kann die Gleichheit des Reifenfülldrucks mehrerer Reifen, insbesondere von mehreren Reifen, die auf einer gemeinsamen Achse montiert sind, überprüft und die Zuverlässigkeit der Messung erhöht werden.

Ein Verfahren zur indirekten Prüfung des Reifenfülldrucks an einer Fahrzeugachse weist beispielsweise die folgenden Verfahrensschritte auf:

1. Zeitmessung am ersten Sensor durch das Überrollen mit dem Reifen (auf beiden Fahrzeugseiten mit jeweils einem Messsystem).

2. Zeitmessung am zweiten Sensor durch das Überrollen mit dem Reifen (auf beiden Fahrzeugseiten mit jeweils einem Messsystem).

3. Bestimmen der Länge der Reifenaufstandsfläche für jeden Reifen aus der Zeitdifferenz der Überfahrt über die beiden Sensoren mit bekanntem Abstand der Sensoren. Die Formel enthält implizit die Geschwindigkeit des Kraftfahrzeuges.

4. Überprüfen der Gültigkeit der Messung für jeden Reifen, ggf. Korrektur der Länge der Reifenaufstandsfläche oder Abbruch der Reifenfülldruckprüfung und Ausgabe "Fehlmessung".

5. Bestimmen der relativen Differenz zwischen den gemessenen Längen der Reifenaufstandsflächen der an einer Achse des Fahrzeugs montierten Reifen und Vergleich mit einem vordefinierten Grenzwert.

5a. Ist die berechnete Differenz kleiner als oder gleich dem Grenzwert, dann ist das Ergebnis in Ordnung.

5b. Ist die berechnete Differenz größer als der Grenzwert, dann wird der Reifen mit der längeren Reifenaufstandsfläche der Zustandsklasse "Reifenfülldruck prüfen - Kraftstoffmehrverbrauch: Ampelfarbe Gelb" zugeordnet.

6. Zuordnen jedes Reifens der Fahrzeugachse anhand der gemessenen Länge der Reifenaufstandsfläche mittels eines Klassifikators zu einer Zustandsklasse und Bewerten des Reifenfülldrucks jedes einzelnen Reifens.

6a. Wurde der Reifen bereits aufgrund der Differenz zwischen den Längen der Reifenaufstandsflächen an einer Achse der Zustandsklasse "Reifenfülldruck prüfen - Kraftstoffmehrverbrauch: Ampelfarbe Gelb" zugeordnet, so wird diese Zustandsklasse nur dann überschrieben, wenn der Klassifikator für diesen Reifen die Zustandsklasse "Reifenfülldruck erhöhen - Sicherheitsrisiko: Ampelfarbe Rot" identifiziert.

7. Optische Anzeige der Prüfergebnisse jedes Reifens für den Fahrer, z.B. im Klartext der Bezeichnung der Zustandsklasse und/oder einer an die Zustandsklasse gekoppelten Ampelfarbe (rot - gelb- grün).

8. Gegebenenfalls Übertragung der Messdaten und Ergebnisse an einen Server (optional).

Die Verfahrensschritte für ein zweiachsiges Fahrzeug umfassen die oben beschriebenen Verfahrensschritte 1 bis 6 für die Vorderachse und unmittelbar daran anschließend die gleichen Verfahrensschritte 1 bis 6 für die Hinterachse. Die Verfahrensschritte 7 und 8 werden für alle Reifen eines Fahrzeugs gleichzeitig ausgeführt.

In einer weiteren Ausführungsform schließt das Verfahren ein, die Profiltiefe des Reifens zu bestimmen und bei der Berechnung der Länge der Reifenaufstandsfläche zu berücksichtigen. Ein Verfahren zur indirekten Prüfung des Reifenfülldrucks umfasst in einer erweiterten Variante unter Berücksichtigung der Profiltiefe des Reifens die folgenden Verfahrensschritte:

1. Zeitmessung am ersten Sensor durch das Überrollen mit dem Reifen (auf beiden Fahrzeugseiten mit jeweils einem Messsystem).

2. Zeitmessung am zweiten Sensor durch das Überrollen mit dem Reifen (auf beiden Fahrzeugseiten mit jeweils einem Messsystem).

3. Messung der Profiltiefe beim Überrollen mit dem Reifen (auf beiden Fahrzeugseiten mit jeweils einem Messsystem).

4. Bestimmung Länge der Reifenaufstandsfläche für jeden Reifen aus den Zeitdifferenzen der Überfahrt über beide Sensoren mit bekanntem Abstand der Sensoren. Die Formel enthält implizit die Geschwindigkeit des Kraftfahrzeuges.

5. Prüfung auf Gültigkeit der Messung für jeden Reifen, ggf. Korrektur der Länge der Reifenaufstandsfläche oder Abbruch der Reifenfülldruckprüfung und Ausgabe "Fehlmessung".

6. Berechnung der profiltiefenkorrigierten Länge der Reifenaufstandsfläche für jeden Reifen mit der gemessenen Profiltiefe.

7. Bestimmung der relativen Differenz zwischen den profiltiefenkorrigierten Längen der Reifenaufstandsflächen der an einer Achse montierten Reifen und Vergleich mit einem vordefinierten Grenzwert.

> 7a. Ist die berechnete Differenz kleiner oder gleich einem vorgegebenen Grenzwert, dann ist das Ergebnis in Ordnung.

> 7b. Ist die berechnete Differenz größer als der vorgegebene Grenzwert, dann wird Reifen mit der längeren Reifenaufstandsfläche der Zustandsklasse "Reifenfülldruck prüfen - Kraftstoffmehrverbrauch: Ampelfarbe Gelb" zugeordnet.

8. Zuordnen jedes Reifens der Fahrzeugachse anhand der profiltiefenkorrigierten Länge der Reifenaufstandsfläche des Reifens mittels eines Klassifikators zu einer Zustandsklasse und damit Bewertung des Reifenfülldrucks jedes Einzelreifens.

8a. Wurde der Reifen bereits aufgrund der Differenz zwischen den Längen der Reifenaufstandsflächen der an einer Achse montierten Reifen der Zustandsklasse "Reifenfülldruck prüfen - Kraftstoffmehrverbrauch: Ampelfarbe Gelb" zugeordnet, so wird diese Zustandsklasse nur dann überschrieben, wenn der Klassifikator für diesen Reifen die Zustandsklasse "Reifenfülldruck erhöhen - Sicherheitsrisiko: Ampelfarbe Rot" identifiziert.

9. Optische Anzeige der Prüfergebnisse jedes Reifens für den Fahrer, z.B. als Klartext der Bezeichnung der Zustandsklasse und/oder der an die Zustandsklasse gekoppelten Ampelfarbe (rot - gelb - grün).

10. Gegebenfalls Übertragung der Messdaten und Ergebnisse an einen Server (optional).

Die Verfahrensschritte für ein zweiachsiges Fahrzeug umfassen die oben beschriebenen Verfahrensschritte 1 bis 8 für die Vorderachse und unmittelbar daran anschließend die gleichen Verfahrensschritte 1 bis 8 für die Hinterachse. Die Verfahrensschritte 9 und 10 werden für alle Reifen des Fahrzeuges gleichzeitig ausgeführt.

Zusätzlich kann auf der Anzeigeeinheit für jeden Reifen auch die Profiltiefe und/oder eine an die Bewertung der Profiltiefe gekoppelte Ampelfarbe angezeigt werden. Die Bewertung der Profiltiefe erfolgt dabei mit der gesetzlich vorgegebenen Mindestprofiltiefe und einem definierten Wert für die Warnung vor stark abgenutzten Reifen mit nur noch geringer Restnutzungsdauer. Unterschreitet die gemessene Profiltiefe einen vorgegebenen Warnwert, wird die Ampelfarbe "Gelb", bei Unterschreiten der Mindestprofiltiefe wird die Ampelfarbe "Rot" und sonst die Ampelfarbe "Grün" angezeigt.

Figurenbeschreibung

Die Erfindung wird im Folgenden anhand der beigefügten Figuren näher erläutert:

Figur 1 zeigt in einer schematischen Darstellung den Zusammenhang zwischen der Zeitmessung eines rollenden Reifens und der Länge seiner Reifenaufstandsfläche.

Figur 2 zeigt in einer schematischen Darstellung ein Ausführungsbeispiel einer Vorrichtung zur Prüfung des Reifenfülldrucks.

Figur 3 zeigt ein Ausführungsbeispiel einer Überfahrrinne mit integriertem Prüfsystem.

Figur 4 zeigt einen Prüfdeckel einer Überfahrrinne in der Aufsicht.

Figur 5 zeigt beispielhaft den Zusammenhang zwischen der Länge der Reifenaufstandsfläche und dem Reifenfülldruck.

Figur 6 zeigt Kennlinien des Reifenfülldrucks als Funktion der Länge der Reifenaufstandsfläche für verschiedene Fahrzeuge unterschiedlicher Fahrzeugklassen mit unterschiedlicher Bereifung.

Figur 7 zeigt Zustandsklassen für den Reifenfülldruck.

Figur 8 beschreibt einen Klassifikator für den Reifenfülldruck mit vier Zustandsklassen.

Figur 9 zeigt Kennlinien des Reifenfülldrucks als Funktion der Länge der Reifenaufstandsfläche für ein teilbeladenes und ein vollbeladenes Fahrzeug.

Figur 10 zeigt den Zusammenhang zwischen der Länge der Reifenaufstandsfläche und dem Reifenfülldruck für zwei unterschiedliche Reifentypen.

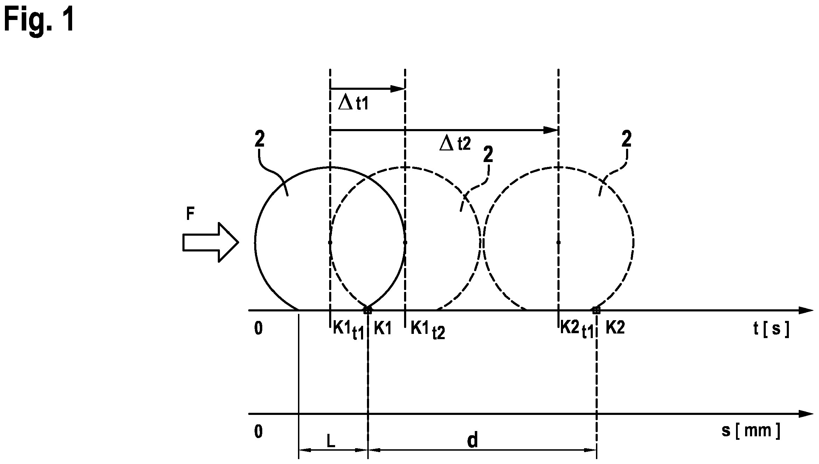

Figur 1 zeigt in einer schematischen Darstellung den Zusammenhang zwischen der Zeitmessung eines rollenden Reifens 2 und Länge L seiner Reifenaufstandsfläche, wobei der eingezeichnete Reifen 2 entlang der Fahrtrichtung F von links nach rechts über einen ersten Kontaktschalter oder Sensor K1 und einen zweiten Kontaktschalter oder Sensor K2 rollt. Die Kontaktschalter K1 und K2 sind in Laufrichtung des Reifens 2 mit einem bekannten Abstand d voneinander beabstandet.

Der erste und der letzte Kontakt der Reifenaufstandsfläche mit dem ersten Kontaktschalter K1 sind mit $K1_{t1}$ bzw. $K1_{t2}$ bezeichnet, der erste Kontakt der Reifenaufstandsfläche mit dem zweiten Kontaktschalter K2 ist mit $K2_{t1}$ bezeichnet.

Die Länge L der Reifenaufstandsfläche ergibt sich aus dem Quotienten der Zeitdifferenzen multipliziert mit dem bekannten Abstand d zwischen den beiden Kontaktschaltern K1, K2:

$$L = d * (K1_{t2} - K1_{t1})/(K2_{t1} - K1_{t1}) = d * \Delta t1/\Delta t2 \qquad (1)$$

Implizit enthält die Formel (1) auch die Bestimmung der Fahrgeschwindigkeit des Fahrzeuges.

Zusätzlich kann wenigstens eine weitere (vierte) Zeitmessung $K2_{t2}$ beim letzten Kontakt der Reifenaufstandsfläche mit dem zweiten Kontaktschalter K2 vorgenommen und für die Auswertung verwendet werden. Optional können zusätzlich auch weitere, in der Figur 1 nicht gezeigte, Kontaktschalter vorgesehen sein, um zusätzliche Zeitmessungen zu ermöglichen.

Eine vierte Zeitmessung $K2_{t2}$ und ggf. weitere Zeitmessungen führen zu einer Überbestimmung, die es ermöglicht, die Genauigkeit der Messung zu steigern und die Ergebnisse zu korrigieren, etwa indem mögliche Geschwindigkeitsänderungen durch Beschleunigen oder Bremsen während der Überfahrt erkannt und berücksichtigt werden.

Auch kann die Messung verbunden mit einer entsprechenden Meldung an den Fahrzeugführer als ungültig ausgewiesen werden, wenn die Geschwindigkeits-änderungen während der Überfahrt einen vorgegebenen Grenzwert überschreiten, so dass eine sinnvolle Korrektur und Auswertung nicht mehr möglich ist.

Die Berechnung der Länge L der Reifenaufstandsfläche gemäß Formel (1) gilt auch, wenn der Abstand d zwischen den beiden Kontaktschaltern K1, K2 kleiner als die Länge L der Reifenaufstandsfläche ist, d.h. wenn der zweite Kontaktschalter K2 bereits von der Reifenaufstandsfläche erreicht wird, bevor die Reifenaufstandsfläche den ersten Kontaktschalter K1 verlassen hat ($K2_{t1} < K1_{t2}$).

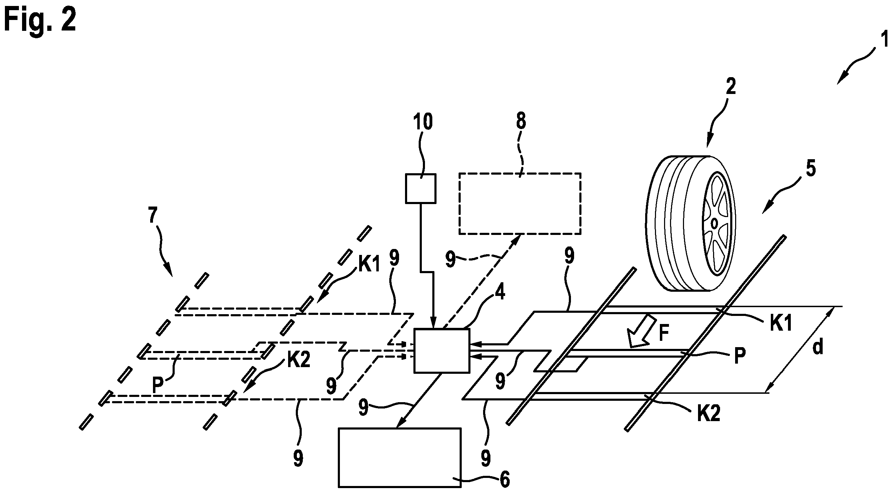

Figur 2 zeigt beispielhaft ein Ausführungsbeispiel einer Prüfvorrichtung 1 zum Prüfen des Reifenfülldrucks mit zwei Anordnungen 5, 7, die jeweils wenigstens zwei Kontaktschalter K1, K2 aufweisen, die in oder auf einer Fahrbahn quer zur Fahrtrichtung F eines in der Figur 2 nicht gezeigten Fahrzeugs angeordnet sind.

Zu einer kompletten Prüfvorrichtung 1 gehören mindestens zwei Anordnungen 5, 7, jeweils eine für jede Fahrzeugseite. Die beiden Kontaktschalter K1, K2 einer Anordnung 5, 7 sind über elektrische Verbindungskabel 9 oder drahtlos mit einer gemeinsamen Mess- und Auswerteeinheit 4 verbunden. Die Mess- und Auswerteeinheit 4 ist durch geeignete elektrische Verbindungskabel 9 oder drahtlos mit einer Anzeigeeinheit 6 und optional mit einem Server 8 verbunden.

Der Abstand d zwischen den beiden Kontaktschaltern K1, K2 der beiden Anordnungen 5, 7 in Fahrtrichtung F ist der Mess- und Auswerteeinheit 4 bekannt. Die Mess- und Auswerteeinheit 4 ist zur präzisen Messung und Speicherung der Zeitintervalle zwischen den Betätigungen der beiden Kontaktschalter K1, K2 jeder Anordnung 5, 7 ausgebildet.

In Fahrtrichtung F zwischen den beiden Kontaktschaltern K1, K2 jeder Anordnung 5, 7 ist jeweils eine Vorrichtung P zur Messung der Profiltiefe des Reifens 2 angeordnet. Die Vorrichtung P zur Messung der Profiltiefe ist optional und für die Realisierung des erfindungsgemäßen Verfahrens zur Bestimmung des Reifenfülldrucks nicht zwingend erforderlich. Die Verwendung der Ergebnisse einer Messung der Profiltiefe zur Verbesserung der Messergebnisse für den Reifenfülldruck wird weiter unten beschrieben.

Die Mess- und Auswerteeinheit 4 ist mit einer Rechnereinheit, einer Speichereinheit und einer Auswertesoftware ausgestattet und führt eine Überprüfung der Plausibilität der Messergebnisse, eine Berechnung der Fahrzeuggeschwindigkeit und der Länge L der Reifenaufstandsfläche jedes Reifens 2, sowie eine Klassifizierung des Reifenfülldrucks p in vordefinierte Zustandsklassen durch. Die Mess- und Auswerteeinheit 4 steuert auch die Anzeigeeinheit 6 zur Ausgabe der Prüfergebnisse sowie bei Bedarf die Übertragung der Mess- und Prüfergebnisse an einen übergeordneten Server 8.

Die Messgenauigkeit, mit der die Länge L der Reifenaufstandsfläche bestimmt werden kann, wird durch den Abstand d der beiden Kontaktschalter K1, K2, die Toleranz des Abstandes d und die Genauigkeit der Zeitmessung definiert. Um bei vertretbarem fertigungstechnischem Aufwand eine ausreichend hohe Messgenauigkeit erreichen zu können, sollte der Abstand d zwischen den beiden Kontaktschaltern K1, K2 wenigstens 200 mm betragen.

Um Fehlmessungen durch ein zufälliges Auslösen der Kontaktschalter K1, K2, z.B. durch über die Kontaktschalter K1, K2 laufende Personen, zu verhindern, kann die Mess- und Auswerteeinheit 4 mit einem Plausibilisierungsalgorithmus ausgestattet sein, der anhand der Zeitsequenz der Zeitmessungen aller Kontaktschalter K1, K2 der Prüfvorrichtung 1 eine eindeutige Unterscheidung zwischen einer Person und einem Fahrzeug vornimmt und fehlerhafte Ergebnisse ausschließt.

Die beschriebene Prüfvorrichtung 1 kann um einen zusätzlichen Sensor 10, der beispielsweise als Kontaktschalter ausgebildet ist, erweitert werden. Dieser Sensor 10 muss geeignet sein, ein auf die Prüfvorrichtung 1 zufahrendes Fahrzeug zu erkennen. Der zusätzliche Sensor 10 ist mit der Mess- und Auswerteeinheit 4 verbunden und diese löst nach dem Erhalt des Signals von dem Sensor 10 kurze Zeit vor der Überfahrt eines Fahrzeuges über die Prüfvorrichtung 1 einen Neustart des Messalgorithmus aus.

Während der Prüfung fährt das Fahrzeug zuerst mit seinen Vorderreifen 2 und dann mit seinen Hinterreifen 2 über die Prüfvorrichtung 1. Damit können mit einer Prüfvorrichtung 1 die Längen L der Reifenaufstandsflächen aller Reifen 2 eines Fahrzeugs nahezu gleichzeitig bestimmt werden.

Die Prüfvorrichtung 1 kann zweckmäßigerweise in eine Überfahrrinne 12 integriert sein, wie sie aus dem Straßenbau bekannt und bewährt ist.

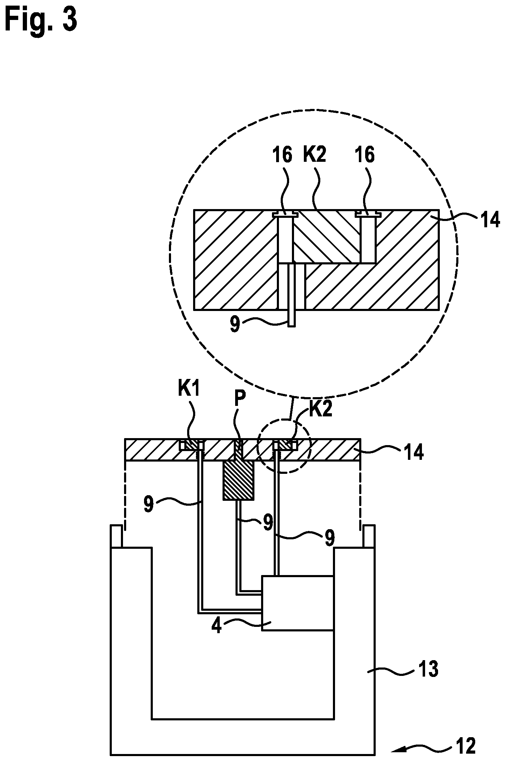

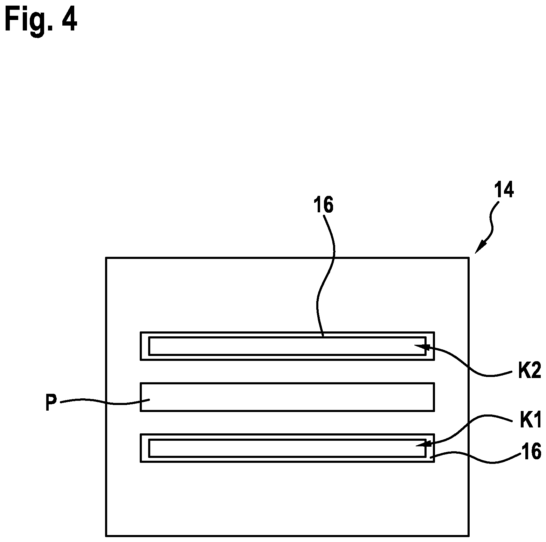

Figur 3 zeigt eine beispielhafte Ausführung mit einer solchen Überfahrrinne 12 im Querschnitt, und Figur 4 zeigt in der Aufsicht einen speziellen Prüfdeckel 14 der Überfahrrinne 12 mit einer darin integrierten Anordnung von zwei Kontaktschaltern K1, K2 für die Messung der Längen L der Reifenaufstandsflächen der Reifen 2, die auf einer Fahrzeugseite montiert sind.

In Fahrtrichtung zwischen den beiden Kontaktschaltern K1, K2 ist eine Vorrichtung P zur Messung der Profiltiefe des Reifens 2 angeordnet.

Die Kontaktschalter K1, K2 werden in jeweils einer Aussparung des Deckels 14 der Überfahrrinne 12 montiert, so dass ihre Oberfläche je nach Ausführungsform des Schaltelementes ggf. erst nach dem Absolvieren des Schaltweges bündig mit der Oberkante des Deckels 14 und damit der Fahrbahnebene abschließt.

Der Zwischenraum zwischen dem Deckel 14 und den Kontaktschaltern K1, K2 ist umlaufend mit einem geeigneten Elastomer 16 mit ausreichender Schichtdicke verfüllt, um das Eindringen von Nässe, Staub und Schmutz dauerhaft zu verhindern. Vorteilhaft ist es, einen Formschluss zwischen einer Aussparung im Deckel 14 und dem Elastomer 16 sowie zwischen Elastomer 16 und den Kontaktschaltern K1, K2 vorzusehen. Dazu sind der Deckel 14 und die Kontaktschalter K1, K2 vorzugsweise mit einer entsprechenden Formgebung, z.B. Nut oder Rillen, ausgebildet.

Die physikalischen Eigenschaften und die Schichtdicke des Elastomers 16 sind so gewählt, dass die Auslösekraft der Kontaktschalter K1, K2 ausreichend klein ist, um auch bei leichten Fahrzeugen mit geringer Radlast ein zuverlässiges Auslösen der Kontaktschalter K1, K2 zu gewährleisten.

Auch können die physikalischen Eigenschaften des Elastomers 16 in dem Algorithmus zur Bestimmung der Länge L der Reifenaufstandsfläche mit einem Korrekturglied berücksichtigt werden.

Jede Aussparung im Deckel 16 ist mit einem Durchbruch (z.B. einer Bohrung) zur Unterseite des Deckels 16 versehen, um elektrische Verbindungskabel 9 von den Kontaktschaltern K1, K2 an die Mess- und Auswerteeinheit 4 zu führen. Die Mess- und Auswerteeinheit 4 kann ebenfalls in die Überfahrrinne 12 integriert sein. Eine Montage an einer Seitenwand 13 der Überfahrrinne 12, wie es in der Figur 3 gezeigt ist, schützt die Mess- und Auswerteeinheit 4 z.B. vor Stauwasser, das sich am Grund der Überfahrrinne 12 ansammelt.

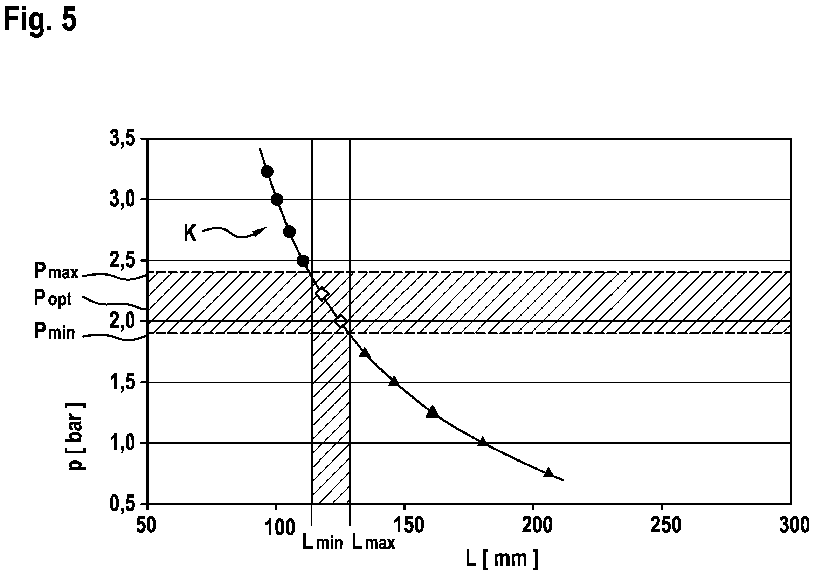

Figur 5 zeigt beispielhaft den Zusammenhang zwischen der Länge L der Reifenaufstandsfläche und dem Reifenfülldruck p für ein konkretes Fahrzeug. Für jedes Fahrzeug ist zwischen Reifen- und Fahrzeughersteller ein optimaler Reifenfülldruck $p_{opt}$, in dem hier gezeigten Beispiel 2,1 bar, festgelegt.

Aus den technischen Hinweisen der Reifenhersteller kann man entnehmen:
Wird der optimale Reifenfülldruck $p_{opt}$ um nicht mehr als 10% unter- oder 15% überschritten, ist mit einem Kraftstoff-Mehrverbrauch von weniger als 1% und einer Reifen-Lebensdauer von mehr als 95% zu rechnen.

Wenn der Reifenfülldruck p jedoch größere Abweichungen vom Optimalwert $p_{opt}$ aufweist, hat dies einen überproportional höheren Kraftstoff-Mehrverbrauch und/oder eine überproportional geringere Lebensdauer zur Folge.

Aus diesem Grund sind in der Figur 5 die horizontalen Grenzlinien $p_{min}$, $p_{max}$ für einen "Reifenfülldruck i.O." mit einem Abstand von +15% und -10% vom Optimalwert $p_{opt}$ eingetragen.

Eine erste Möglichkeit für die Prüfung des Reifenfülldrucks p aus der gemessenen Länge L der Reifenaufstandsfläche lässt sich aus Figur 5 ableiten. Aus den Schnittlinien der eingetragenen Druckgrenzwerte $p_{min}$, $p_{max}$ mit der ermittelten Reifenkennlinie K ergeben sich unmittelbar die Grenzwerte $L_{min}$, $L_{max}$ für die Länge L der Reifenaufstandsfläche für den Zustand "Reifenfülldruck i.O.". Damit kann man aus der Messung der Länge L der Reifenaufstandsfläche unmittelbar eine Prüfung des Reifenfülldrucks p ableiten. Kleinere Längen L der Reifenaufstandsfläche ($L < L_{min}$) weisen auf den Zustand "Reifenfülldruck zu hoch" und größere Längen L der Reifenaufstandsfläche ($L > L_{max}$) weisen auf den Zustand "Reifenfülldruck zu gering" hin.

Bei genauer Kenntnis der Reifenkennlinie K kann aus der Länge L der Reifenaufstandsfläche sogar direkt auf den Reifenfülldruck p geschlossen werden. Dies setzt jedoch voraus, dass für das geprüfte Fahrzeug, z.B. aus einer Datenbank, die Abmessung und der Typ der Reifen 2 und die zu diesen Reifen 2 gehörende Reifenkennlinie(n) K für den Zusammenhang zwischen der Länge L der Reifenaufstandsfläche und dem Reifenfülldruck p bekannt sind. Dies wird in der Praxis nur in Ausnahmefällen gegeben sein.

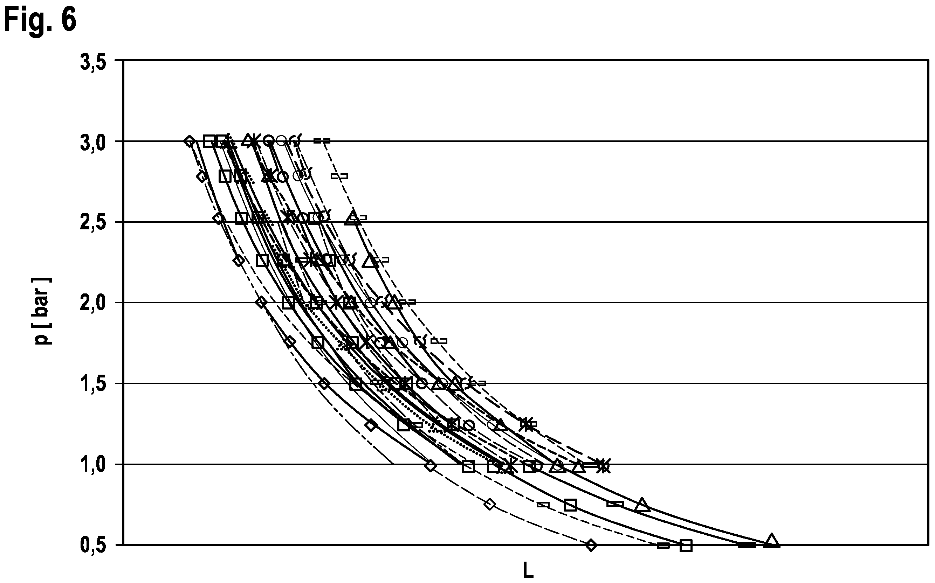

Figur 6 zeigt mehrere Kennlinien des Reifenfülldrucks als Funktion der Länge L der Reifenaufstandsfläche für verschiedene Fahrzeuge unterschiedlicher Fahrzeugklassen mit unterschiedlicher Bereifung. Es ist erkennbar, dass die Kennlinien stark voneinander abweichen. Die Kennlinien erstrecken sich in einem breiten Band und überschneiden sich teilweise, weisen aber immer noch eine allgemeine, gemeinsame Systematik auf. Eine unmittelbare Bewertung des Reifenfülldrucks p aus der Länge L der Reifenaufstandsfläche scheint jedoch nicht trivial zu sein.

Im Folgenden wird beschrieben, wie aus der in der Figur 6 dargestellten Kennlinienschar ein allgemein gültiges Prüfverfahren abgeleitet werden kann.

Dazu wird, wie in der Figur 5 für einen Einzelreifen 2 gezeigt, für jeden Punkt der Kennlinie K jedes Reifens 2 analysiert, welcher Reifenfülldruckzustand vorliegt. Dabei wird zwischen den drei Zuständen "Reifenfülldruck zu hoch", "Reifenfülldruck zu gering" und "Reifenfülldruck i.O." unterschieden.

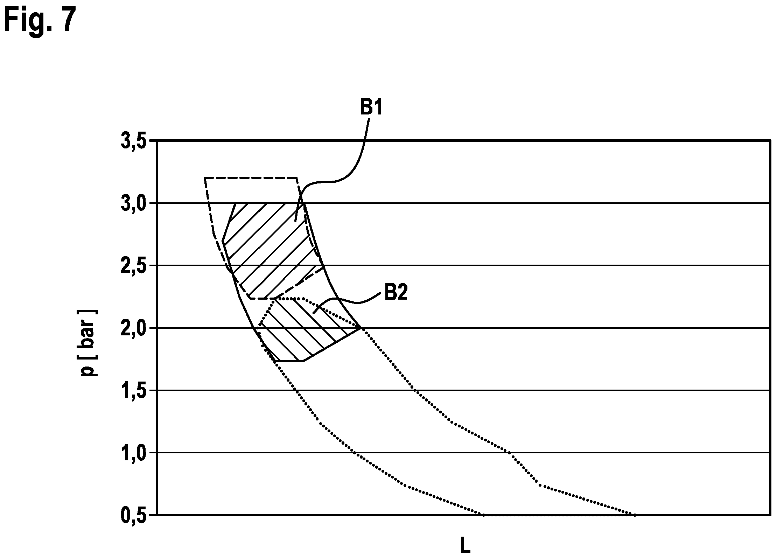

Figur 7 zeigt das Ergebnis der Analyse für die drei Zustandsklassen "Reifenfülldruck zu hoch", "Reifenfülldruck i.O" und "Reifenfülldruck zu niedrig" für den Reifenfülldruck p. In Figur 7 sind aus Gründen der Übersichtlichkeit nur die Grenzlinien jedes Reifenfülldruckzustands eingezeichnet.

Aus Figur 7 ist ersichtlich, dass es zwischen den Zuständen "Reifenfülldruck zu hoch" (gestrichelte Begrenzungslinie) und "Reifenfülldruck i.O" (durchgezogene Begrenzungslinie) einen großen ersten Überschneidungsbereich B1 gibt. Der zweite Überschneidungsbereich B2 zwischen den Zuständen "Reifenfülldruck i.O" (durchgezogene Begrenzungslinie) und "Reifenfülldruck zu niedrig" (gepunktete Begrenzungslinie) ist kleiner.

Mit bekannten mathematischen Optimierungsmethoden wird nun ein Zustandsklassifikator für den Reifenfülldruck p auf der Basis der gemessenen Länge L der Reifenaufstandsfläche bestimmt. Dabei können weiterhin die zuvor beschriebenen drei Zustandsklassen verwendet werden; alternativ kann auch eine größere Anzahl von Zustandsklassen definiert werden, die jeweils mit einer klaren Handlungsempfehlung für den Fahrer verbunden sind.

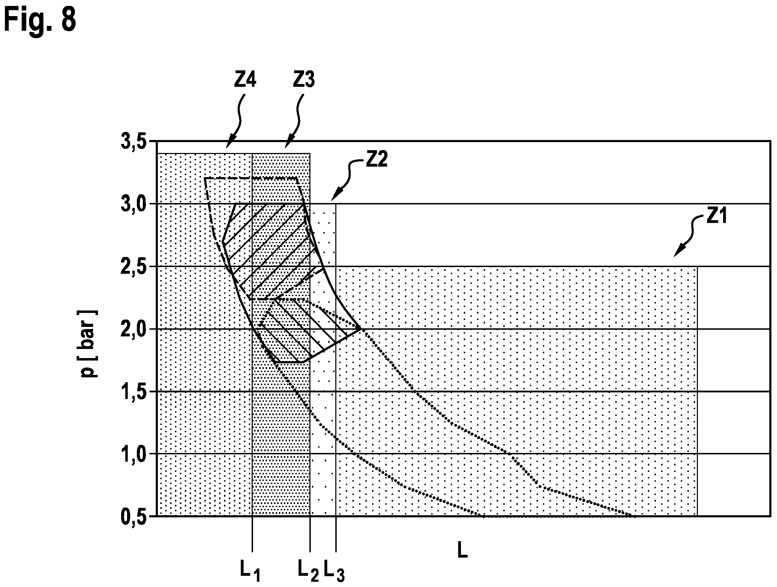

Als Beispiel wird nun in Verbindung mit der Figur 8 ein Klassifikator mit folgenden vier Zustandsklassen beschrieben:

Z1: Druck zu niedrig, Sicherheitsrisiko: Ampelfarbe Rot, Reifenfülldruck erhöhen!
Z2: Test-niedrig, erhöhter Kraftstoffverbrauch: Ampelfarbe Gelb, Reifenfülldruck prüfen!
Z3: Druck i.O., Reifenfülldruck in Ordnung: Ampelfarbe Grün
Z4: Druck zu hoch, erhöhter Verschleiß: Ampelfarbe Gelb, Reifenfülldruck prüfen!

Mit dem Optimierungskriterium einer möglichst geringen Fehlklassifikationsrate werden die Zustandsgrenzen $L_1$, $L_2$, $L_3$ der vier Zustandsklassen Z1, Z2, Z3, Z4 berechnet. Diese Zustandsgrenzen $L_1$, $L_2$, $L_3$ sind in die Figur 8 als senkrechte Linien $L_1$, $L_2$, $L_3$ eingezeichnet. Mit diesem Klassifikator wird jede gemessene Länge L der Reifenaufstandsfläche mit einem einfachen Algorithmus unmittelbar einer der vier Zustandsklassen Z1, Z2, Z3, Z4 zugeordnet.

Ein weiteres Prüfkriterium für den Reifenfülldruck p stellt die Forderung der Reifen- und Fahrzeughersteller dar, dass die Fülldrücke p aller Reifen 2 einer Achse gleich sein müssen, wogegen die Fülldrücke p der Reifen 2 zwischen Vorder- und Hinterachse durchaus differieren dürfen. Da auf einer Achse immer Reifen 2 des gleichen Typs montiert werden, ergibt sich mit der Messung der Länge L der Reifenaufstandsfläche eine zusätzliche Möglichkeit, Abweichungen beim Reifenfülldruck p zwischen dem linkem und dem rechtem Reifen 2 einer Achse relativ genau zu prüfen.

Bei einer solchen Relativprüfung entfällt der Bedarf einer genauen Kenntnis der Kennlinie K, welche die Beziehung zwischen der Länge L der Reifenaufstandsfläche und dem Reifenfülldruck p beschreibt. Die Differenz $\Delta L$ zwi-schen den Längen L der beiden Reifenaufstandsflächen der an einer Achse montierten Reifen 2 darf einen definierten Grenzwert von x% des kleineren der beiden Werte nicht überschreiten. Alternativ kann sich dieser Grenzwert auch auf den größeren der beiden Werte oder auf ihren Mittelwert beziehen.

Ausgehend von den vorherigen Darlegungen zur Ableitung der Grenzlinien $L_{min}$, $L_{max}$ für den "Reifenfülldruck i.0." in Figur 5 und unter Beachtung der Ergebnisse mit sehr unterschiedlichen Reifen 2 in Figur 7 sollte die Differenz $\Delta L$ der Längen L der Reifenaufstandsflächen zwischen dem linken und dem rechten Reifen 2 nicht größer als 6% sein.

Aus den Untersuchungen mit einem 4-stufigen-Klassifikator wurden für eine Einzelreifenbewertung folgende Ergebnisse erzielt:

Z1: Reifenfülldruck erhöhen, Sicherheitsrisiko: Ampelfarbe Rot zu etwa 80% richtig erkannt

Z2: Reifenfülldruck prüfen, erhöhter Kraftstoffverbrauch: Ampelfarbe Gelb zu etwa 30% richtig erkannt

Z3: Reifenfülldruck in Ordnung: Ampelfarbe Grün zu etwa 60% richtig erkannt

Z4: Reifenfülldruck prüfen, erhöhter Verschleiß: Ampelfarbe Gelb zu etwa 60% richtig erkannt

Damit ergibt sich für die besonders sicherheitsrelevante Zustandsklasse Z1 eine ausreichend hohe Erkennungsrate bzw. geringe Fehlklassifikationsrate. Die relativ hohen Fehlklassifikationsraten bei den anderen Zustandsklassen Z2, Z3, Z4 können durch eine zusätzliche achsweise Bewertung der Differenz $\Delta L$ der Längen L der Reifenaufstandsflächen in der Praxis noch deutlich reduziert werden.

In der Figur 5 ist die Kennlinie für den Reifenfülldruck p und die Länge L der Reifenaufstandsfläche für einen konkreten Reifen 2 mit den Grenzen für "Reifenfülldruck i.O." und die entsprechenden Längen L der Reifenaufstandsfläche dargestellt.

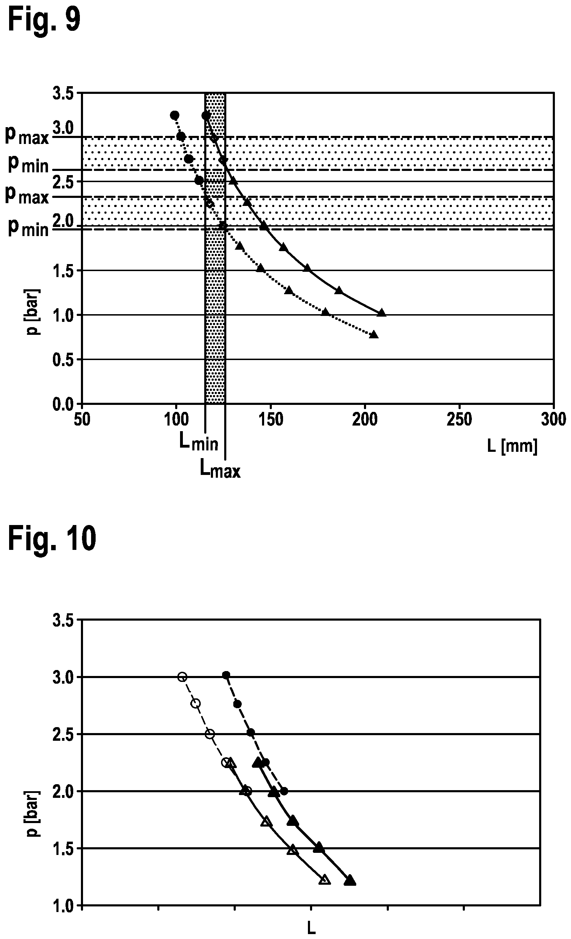

Die Figur 9 zeigt die Kennlinien für ein teilbeladenes und ein vollbeladenes Fahrzeug mit den entsprechenden horizontalen Grenzlinien für den "Reifenfülldruck i.O." für die beiden genannten Beladungszustände in einem gemeinsamen Diagramm.

Aus der Darstellung der Figur 9 ist gut erkennbar, dass die Fahrzeughersteller mit der Festlegung der Reifenfülldrücke p für unterschiedliche Beladungszustände versuchen, unabhängig vom Beladungszustand eine gleichbleibende Länge L der Reifenaufstandsfläche zu erreichen. Es ist daher zu vermuten, dass eine hohe Korrelation zwischen der Länge L der Reifenaufstandsfläche und den für die Fahrsicherheit und den Fahrkomfort wichtigen physikalischen Reifeneigenschaften besteht. Dieser Sachverhalt unterstützt und begünstigt das erfindungsgemäße Verfahren zur Bewertung des Reifenfülldrucks p basierend auf der gemessenen Länge L der Reifenaufstandsfläche.

In weitergehenden Untersuchungen an unterschiedlichen Reifentypen und Reifenabmessungen wurde der Einfluss der Profiltiefe auf die Länge L der Reifenaufstandsfläche bei unterschiedlichen Reifendrücken p untersucht.

Es ist festzustellen, dass sich die Länge L der Reifenaufstandsfläche bei gleich bleibendem Reifenfülldruck p und gleich bleibender Radlast mit zunehmendem Reifenverschleiß, d.h. bei abnehmender Profiltiefe, verringert.

In Figur 10 sind die Zusammenhänge zwischen der Länge L der Reifenaufstandsfläche und dem Reifenfülldruck p für zwei unterschiedliche Reifentypen, einen Standardreifen (durchgezogene Linie) und ein Runflat-Reifen (gestrichelte Linie) bei für jeden Reifentyp konstanter, aber reifentypisch für die beiden Reifentypen unterschiedlicher Radlast und jeweils unterschiedlichen Verschleißzuständen (Neureifen und Reifen mit maximal zulässigem Reifenverschleiß bzw. minimal zulässiger Profiltiefe) dargestellt.

Aus der Figur 10 ist erkennbar, dass die Reifen 2 mit zunehmendem Reifenverschleiß (linke Kurven, offene Symbole) unter sonst gleichen Bedingungen eine geringere Länge L der Reifenaufstandsfläche als im Neuzustand (rechte Kurven, ausgefüllte Symbole) aufweisen. Daraus folgt, dass man die Genauigkeit des erfindungsgemäßen indirekten Verfahrens zum Prüfen des Reifenfülldrucks durch Kombination mit einer zusätzlichen Profiltiefenmessung deutlich verbessern kann.

Ein derart erweitertes Prüfverfahren umfasst gegenüber dem zuvor beschriebenen Verfahren eine zusätzliche Messung der Profiltiefe jedes Reifens 2.

Dazu wird die bereits erwähnte, in den Figuren 2 bis 4 gezeigte Vorrichtung P zur Messung der Profiltiefe verwendet. Als zusätzliche Schritte wird mit Hilfe der Vorrichtung P die Profiltiefe des Reifens 2 gemessen und eine Korrektur der gemessenen Länge L der Reifenaufstandsfläche auf Basis der gemessenen Profiltiefe durchgeführt.

Bei allen untersuchten Sommerreifen, Radlasten und Reifendrücken wurde jeweils eine Änderung der Länge L der Reifenaufstandsfläche von 1,6 mm je mm Reifenverschleiß ermittelt. Die profiltiefenkorrigierte Länge L der Reifenaufstandsfläche $L_{RK}$ kann daher wie folgt berechnet werden:

$$L_{RK} = L_R + (T_{max} - T_R) * 1,6 \qquad (2)$$

Dabei ist:

$L_R$ die wie zuvor beschrieben gemessene Länge der Reifenaufstandsfläche,

$T_{max}$ die (maximale) Profiltiefe eines neuen Reifens,
$T_R$ die aktuell gemessene Profiltiefe.

Für Winterreifen können für die Änderung der Länge $L_R$ der Reifenaufstandsfläche als Funktion der Profiltiefe (hier: Faktor 1,6) und für die maximale Profiltiefe $T_{max}$ andere Werte verwendet werden.

Anschließend wird das Verfahren wie zuvor beschrieben fortgeführt, wobei an Stelle der gemessenen Länge $L_R$ der Reifenaufstandsfläche die korrigierte Länge $L_{RK}$ der Reifenaufstandsfläche verwendet wird, um anhand des zuvor beschriebenen Zustandsklassifikators den Reifenfülldruck p im Sinne einer Diagnose zu bewerten.

Bei der beschriebenen Erweiterung des Verfahrens um eine Profiltiefenmessung bedarf es keiner Änderung des zuvor beschriebenen Zustandsklassifikators.

**Patentansprüche**

1. Verfahren zum Prüfen des Drucks (p) in einem Reifen (2) eines rollenden Fahrzeugs, **dadurch gekennzeichnet, dass** das Verfahren einschließt, aus einer Mehrzahl von Reifenkennlinien, die den Zusammenhang zwischen einer Länge (L) der Reifenaufstandsfläche eines Reifens (2) und dem Reifenfülldruck (p) beschreiben, mit dem Optimierungskriterium einer möglichst geringen Fehlklassifikationsrate für mehrere Zustandsklassen (Z1, Z2, Z3, Z4) des Reifenfülldrucks (p) Zustandsgrenzen (L1, L2, L3, L4) der Länge (L) der Reifenaufstandsfläche zu berechnen,
die Länge (L) der Reifenaufstandsfläche des Reifens (2) in Fahrtrichtung (F) zu bestimmen, und
die so bestimmte Länge (L) der Reifenaufstandsfläche mit Hilfe der zuvor bestimmten Zustandsgrenzen (L1, L2, L3, L4) unmittelbar einer der Zustandsklassen (Z1, Z2, Z3, Z4) des Reifenfülldrucks (p) in dem Reifen (2) zuzuordnen.

2. Verfahren nach Anspruch 1, wobei die Länge (L) der Reifenaufstandsfläche aus wenigstens einer Zeitdifferenz ($\Delta t_1$, $\Delta t_2$) zwischen dem Überrollen von wenigstens zwei in Fahrtrichtung (F) hintereinander angeordneten Sensoren (K1, K2) bestimmt wird.

3. Verfahren nach Anspruch 2, wobei die Zeitdifferenzen ($\Delta t_1$, $\Delta t_2$) die Zeitdifferenz zwischen dem ersten und letzten Kontakt der Reifenaufstandsfläche mit einem ersten Sensor (K1) einschließen.

4. Verfahren nach einem der Ansprüche 2 oder 3, wobei die Zeitdifferenzen ($\Delta t_1$, $\Delta t_2$) die Zeitdifferenz ($\Delta t_2$) zwischen dem ersten Kontakt der Reifenaufstandsfläche mit einem ersten Sensor (K1) und dem ersten Kontakt der Reifenaufstandsfläche mit einem zweiten Sensor (K2) und/oder die Zeitdifferenz zwischen dem letzten Kontakt der Reifenaufstandsfläche mit einem ersten Sensor (K1) und dem letzten Kontakt der Reifenaufstandsfläche mit einem zweiten Sensor (K2) einschließen.

5. Verfahren nach einem der vorangehenden Ansprüche, wobei das Verfahren einschließt, die Längen (L) der Reifenaufstandsflächen von wenigstens zwei Reifen (2), insbesondere von wenigstens zwei auf derselben Achse des Fahrzeugs montierten Reifen (2), miteinander zu vergleichen.

6. Verfahren nach einem der vorangehenden Ansprüche, wobei das Verfahren einschließt, die Profiltiefe des Reifens (2) zu bestimmen und bei der Berechnung der Länge (L) der Reifenaufstandsfläche zu berücksichtigen.

7. Vorrichtung (1) zum Prüfen des Drucks (p) in einem Reifen (2) eines über eine Fahrbahnebene rollenden Fahrzeugs, **dadurch gekennzeichnet, dass** die Vorrichtung (1) aufweist:

wenigstens zwei in Laufrichtung des Reifens (2) voneinander beabstandete Sensoren (K1, K2), die geeignet sind, einen Kontakt des Reifens (2) mit der Fahrbahnebene zu detektieren, und
eine Auswerteeinheit (4), die ausgebildet ist,
aus zeitlichen Abständen der Sensorsignale die Länge (L) der Reifenaufstandsfläche des Reifens (2) in Fahrtrichtung (F) zu bestimmen, und
die so bestimmte Länge (L) der Reifenaufstandsfläche mit Hilfe zuvor bestimmten Zustandsgrenzen (L1, L2, L3, L4) unmittelbar einer der Zustandsklassen (Z1, Z2, Z3, Z4) des Reifenfülldruck (p) in dem Reifen (2) zuzuordnen, wobei aus einer Mehrzahl von Reifenkennlinien, die den Zusammenhang zwischen einer Länge (L) der Reifenaufstandsfläche eines Reifens (2) und dem Reifenfülldruck (p) beschreiben, mit dem Optimierungskriterium einer möglichst geringen Fehlklassifikationsrate für mehrere Zustandsklassen (Z1, Z2, Z3, Z4) des Reifenfülldrucks (p) Zustandsgrenzen (L1, L2, L3, L4) der Länge (L) der Reifenaufstandsfläche berechnet wurden.

8. Vorrichtung (1) nach Anspruch 7, wobei die Vorrichtung eine Einrichtung (P) umfasst, die zum Bestimmen der Profiltiefe des Reifens (2) ausgebildet ist.


**Claims**

1. A method for checking the pressure (p) in a tire (2) of a rolling vehicle, **characterized in that** said method comprises:

   computing, from a plurality of tire characteristic curves describing the rela - tionship between a length (L) of the tire contact patch of a tire (2) and the tire inflation pressure (p), state boundaries (L1, L2, L3, L4) of the length (L) of the tire contact patch with the aid of the optimization criterion of an as low as possible erroneous classification rate for a plurality of state categories (Z1, Z2, Z3, Z4) of the tire inflation pressure (p),
   determining the length (L) of the tire contact patch of the tire (2) in a driving direction (F), and
   assigning the thus determined length (L) of the tire contact patch directly to one of the state categories (Z1, Z2, Z3, Z4) of the tire inflation pressure (p) in the tire (2) with the aid of the state boundaries (L1, L2, L3, L4) deter - mined before.

2. The method according to claim 1,
   wherein the length (L) of the tire contact patch is determined from at least one time difference ($\Delta t_1$, $\Delta t_2$) between the crossing over at least two sensors (K1, K2) which are arranged one after the other in the driving direction (F).

3. The method according to claim 2,
   wherein the time differences ($\Delta t_1$, $\Delta t_2$) include the time difference between the first contact and the last contact of the tire contact patch with the first sensor (K1).

4. The method according to any of claims 2 or 3,
   wherein the time differences ($\Delta t_1$, $\Delta t_2$) include the time difference ($\Delta t_2$) between the first contact of the tire contact patch with a first sensor (K1) and the first contact of the tire contact patch with a second sensor (K2) and/or the time difference between the last contact of the tire contact patch with a first sensor (K1) and the last contact of the tire contact patch with a second sensor (K2).

5. The method according to any of the preceding claims,
   wherein the method comprises comparing the lengths (L) of the tire contact patches of at least two tires (2), in particular of at least two tires (2) mounted on the same axle of the vehicle, to one another.

6. The method according to any of the preceding claims,
   wherein the method comprises determining the profile depth of the tire (2) and taking the same into consideration in computing the length (L) of the tire contact patch.

7. A device (1) for checking the pressure (p) in a tire (2) of a vehicle which is rolling over a roadway plane,
   **characterized in that** said device (1) comprises:

   at least two sensors (K1, K2) which are spaced apart from one another in the rolling direction of the tire (2) and which are suitable to detect contact of the tire (2) with the roadway plane, and
   an evaluation unit (4) configured
   to determine the length (L) of the tire contact patch of the tire (2) in the driv - ing direction (F) from time intervals of the sensor signals, and
   to assign the thus determined length (L) of the tire contact patch directly to one of the state categories (Z1, Z2, Z3, Z4) of the tire inflation pressure (p) in the tire (2) with the aid of state boundaries (L1, L2, L3, L4) determined before, wherein from a plurality of tire characteristic curves describing the relationship between a length (L) of the tire contact patch of a tire (2) and the tire inflation pressure (p), state boundaries (L1, L2, L3, L4) of the length (L) of the tire contact patch were computed with the aid of the optimization criterion of an as low as possible erroneous classification rate for a plurality of state categories (Z1, Z2, Z3, Z4) of the tire inflation pressure (p).

8. The device (1) according to claim 7,
   wherein said device comprises a means (P) which is configured to determine the profile depth of the tire (2).

**Revendications**

1. Procédé pour contrôler la pression de gonflage (p) d'un pneumatique (2) d'un véhicule roulant, **caractérisé en ce que** le procédé inclut

   le calcul, à partir d'une pluralité de courbes caractéristiques du pneumatique qui décrivent la relation entre une longueur (L) de la surface de contact du pneumatique (2) et la pression de gonflage (p) du pneumatique, de limites d'état (L1, L2, L3, L4) de la longueur (L) de la surface de contact du pneumatique, pour plusieurs classes d'état (Z1, Z2, Z3, Z4) de la pression de gonflage (p), avec comme critère d'optimisation un taux d'erreur de classification le plus faible possible ;

   la détermination de la longueur (L) de la surface de contact du pneumatique (2) dans la direction de déplacement (F) ; et

   l'association directe de la longueur (L) ainsi déterminée de la surface de contact du pneumatique à l'une des classes d'état (Z1, Z2, Z3, Z4) de la pression de gonflage (p) du pneumatique (2), à l'aide des limites d'état (L1, L2, L3, L4) précédemment définies.

2. Procédé selon la revendication 1, dans lequel la longueur (L) de la surface de contact du pneumatique est déterminée à partir d'au moins une différence de temps ($\Delta t_1$, $\Delta t_2$) entre le roulement du véhicule au-dessus d'au moins deux capteurs (K1, K2) agencés l'un derrière l'autre dans la direction de déplacement (F).

3. Procédé selon la revendication 2, dans lequel les différences de temps ($\Delta t_1$, $\Delta t_2$) incluent la différence de temps entre le premier et le dernier contact de la surface de contact du pneumatique avec un premier capteur (K1).

4. Procédé selon l'une quelconque des revendications 2 ou 3, dans lequel les différences de temps ($\Delta t_1$, $\Delta t_2$) incluent la différence de temps ($\Delta t_2$) entre le premier contact de la surface de contact du pneumatique avec un premier capteur (K1) et le premier contact de la surface de contact du pneumatique avec un deuxième capteur (K2) et/ou la différence de temps entre le dernier contact de la surface de contact du pneumatique avec un premier capteur (K1) et le dernier contact de la surface de contact du pneumatique avec un deuxième capteur (K2).

5. Procédé selon l'une quelconque des revendications précédentes, **caractérisé en ce que** le procédé inclut la comparaison des longueurs (L) des surfaces de contact d'au moins deux pneumatiques (2), en particulier d'au moins deux pneumatiques (2) montés sur le même essieu du véhicule.

6. Procédé selon l'une quelconque des revendications précédentes, **caractérisé en ce que** le procédé inclut la détermination de la profondeur de sculpture du pneumatique (2) et sa prise en compte lors du calcul de la longueur (L) de la surface de contact du pneumatique.

7. Dispositif (1) pour contrôler la pression de gonflage (p) d'un pneumatique (2) d'un véhicule roulant sur un plan de la chaussée,
   **caractérisé en ce que** le dispositif (1) présente :

   au moins deux capteurs (K1, K2) espacés l'un de l'autre dans la direction de déplacement du pneumatique (2), qui sont en mesure de détecter un contact du pneumatique (2) avec le plan de la chaussée, et
   une unité d'évaluation (4) réalisée de manière à
   déterminer la longueur (L) de la surface de contact du pneumatique (2) dans la direction de déplacement (F) à partir d'intervalles des signaux des capteurs ; et à
   associer directement la longueur (L) ainsi déterminée de la surface de contact du pneumatique à l'une des classes d'état (Z1, Z2, Z3, Z4) de la pression de gonflage (p) du pneumatique (2), à l'aide de limites d'état (L1, L2, L3, L4) précédemment définies, sachant qu'à partir d'une pluralité de courbes caractéristiques du pneumatique qui décrivent la relation entre une longueur (L) de la surface de contact du pneumatique (2) et la pression de gonflage (p) du pneumatique, des limites d'état (L1, L2, L3, L4) de la longueur (L) de la surface de contact du pneumatique ont été calculées pour plusieurs classes d'état (Z1, Z2, Z3, Z4) de la pression de gonflage (p), avec comme critère d'optimisation un taux d'erreur de classification le plus faible possible.

8. Dispositif (1) selon la revendication 7, **caractérisé en ce que** le dispositif comprend une unité (P) configurée de manière à déterminer la profondeur de sculpture du pneumatique (2).

# Fig. 1

# Fig. 2

EP 2 834 611 B1

EP 2 834 611 B1

# Fig. 3

15

# Fig. 4

Fig. 5

## Fig. 6

EP 2 834 611 B1

EP 2 834 611 B1

**Fig. 7**

Fig. 8

# Fig. 9

# Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2852907 A3
- JP 3141838 U
- DE 19630015 A1
- US 20080133081 A1
- EP 656269 A1
- EP 695935 A1
- WO 2008034411 A1
- DE 102007054156 A1
- US 6823728 B1
- JP 58112812 A
- US 5396817 A
- EP 892259 A1
- WO 1998052008 A1
- DE 19705047 A1
- US 20090290757 A
- EP 1305590 A1